# EUROPÄISCHE PATENTSCHRIFT

(11) **EP 1 150 857 B1**
(45) Veröffentlichungstag und Bekanntmachung des Hinweises auf die Patenterteilung: **23.07.2003**
(21) Anmeldenummer: 00904983.4
(22) Anmeldetag: 29.01.2000
(51) Int. Cl.: B60L 1/00

(54) **VERFAHREN ZUM BETRIEB VON ELEKTRISCHEN NEBENANTRIEBEN**
METHOD OF OPERATING ELECTRIC AUXILIARY DRIVES
PROCEDE PERMETTANT DE FAIRE FONCTIONNER DES ENTRAINEMENTS AUXILIAIRES ELECTRIQUES

(30) Priorität: 04.02.1999 DE 19904480
(43) Veröffentlichungstag der Anmeldung: 07.11.2001
(73) Patentinhaber: ZF FRIEDRICHSHAFEN Aktiengesellschaft, 88038 Friedrichshafen (DE)
(72) Erfinder: VOSS, Thomas, D-88069 Tettnang (DE); HELLWIG, Bert, D-88045 Friedrichshafen (DE); WOLFGANG, Werner, D-88213 Ravensburg (DE); ENGSTLER, Jürgen, D-88048 Friedrichshafen (DE)
(86) Internationale Anmeldenummer: EP0000706
(87) Internationale Veröffentlichungsnummer: WO00046061

(56) Entgegenhaltungen:
- CH-A- 662 991
- US-A- 5 519 301
- PATENT ABSTRACTS OF JAPAN vol. 007, no. 126 (M-219), 31. Mai 1983 (1983-05-31) & JP 58 043101 A (MITSUBISHI DENKI KK), 12. März 1983 (1983-03-12) & JP 58 043101 A (MITSUBISHI DENKI KK) 12. März 1983 (1983-03-12)

## Beschreibung

Die vorliegende Erfindung betrifft ein Verfahren zum Betrieb von elektrischen Nebenantrieben in Elektrofahrzeugen, die eine Gleichstromquelle aufweisen, welche eine variable Spannung abgibt, die einem Wechselrichter zugeführt wird, der über einen Zwischenkreis Wechselstrommotoren ansteuert, die mit den einzelnen Nebenantrieben verbunden sind.

In Elektrofahrzeugen, insbesondere im Nutzfahrzeugsegment, müssen die Nebenantriebe z. B. Lenkhilfen und Luftkompressoren elektrisch angetrieben werden, da bei reinen Batterie- Oberleitungs- oder Brennstoffzellenfahrzeugen kein Verbrennungsmotor zur mechanischen Kopplung der Nebenantriebe zur Verfügung steht. Auch bei dieselelektrisch angetriebenen Fahrzeugen, d. h. bei solchen, die eine Kombination aus Verbrennungsmotor und Generator aufweisen (Dieselelektrik) werden immer mehr elektrisch angetriebene Nebenantriebe eingesetzt, da sich hierbei Vorteile bezüglich des Freiheitsgrades zur Integration ins Fahrzeug und insbesondere bei Verwendung von bürstenlosen Elektromotoren wie Asynchronmaschinen bei der angestrebten Wartungsfreiheit ergeben.

Elektrofahrzeuge wurden als Alternative zu Fahrzeugen entwickelt, die ausschließlich Verbrennungsmotoren aufweisen, da diese schädliches Abgas ausstoßen. Beim reinen Elektrofahrzeug ist jedoch die Energiespeicherkapazität der Batterie gering und die zurückgelegte Entfernung während ihres Ladezyklus kurz. Aus diesem Grunde wurden Hybridfahrzeuge entwickelt, bei denen das Fahrzeug sowohl einen Generator als Energiequelle als auch einen Verbrennungsmotor zum Antrieb des Generators aufweist, wie es z. B. in der DE 195 23 985 beschrieben ist. Dieses Fahrzeug weist eine Steuervorrichtung auf zum Betrieb eines Generators, der durch einen Verbrennungsmotor angetrieben wird und eine Batterie sowie einen Generatorwechselrichter zur Steuerung des Generators und einen Motorwechselrichter, der das Fahrzeug unter Verwendung von Batterieenergie entsprechend dem Betätigungszustand eines Fahrpedals antreibt, wobei ein Kondensator durch den Wechselrichter zum Antreiben des Fahrzeugs und durch den Wechselrichter für den Generator gemeinsam genutzt wird. Der Generatorwechselrichter ist mit einer Steuereinrichtung versehen, die den Generator zur Drehung antreibt, wenn dieser als Motor zum Antreiben des Verbrennungsmotors verwendet wird, indem durch den Generatorwechselrichter ein Stromfluß hervorgerufen wird, wenn die Kapazität der Batterie beim regenerativen Steuern des Motors einen vorbestimmten Betrag aufweist oder größer ist, wodurch der Verbrennungsmotor durch den Generator angetrieben wird.

Aus der DE 197 18 378 ist ein Hybridfahrzeug bekannt, das mit zwei oder mehreren Arten von Antriebsmaschinen für den Antrieb des Fahrzeugs ausgestattet ist. Bei diesem bekannten Fahrzeug ist vorgesehen, daß die Antriebskraft einer Antriebsmaschine während des Betriebs einer anderen Antriebsmaschine in Abhängigkeit von dem spezifischen, vom Fahrer beabsichtigten Fahrzustand effektiv genutzt werden kann; neben einer Brennkraftmaschine befindet sich im Frontbereich dieses Fahrzeugs ein an eine Batterie angeschlossener Elektromotor-Generator, der eine regenerative Funktion, die in der Umwandlung von kinetischer Energie in elektrische Energie besteht und eine Kraftantriebsfunktion aufweist, die in der Umwandlung von elektrischer Energie in kinetische Energie besteht. Im Heckbereich des Fahrzeugs befindet sich ein weiterer Elektromotor-Generator, der eine regenerative Funktion und eine Kraftantriebsfunktion aufweist. Der im Frontbereich vorgesehene Elektromotor-Generator kann als Hauptantriebsquelle für alle elektrischen Zusatzeinrichtungen einschließlich des Zündsystems der Brennkraftmaschine verwendet werden sowie als eine Energiequelle für den zweiten Elektromotor-Generator.

Aus der US 5,519,301 ist ein Verfahren zum Betrieb von elektrischen Nebenantrieben in Elektrofahrzeugen bekannt, die eine Gleichstromquelle aufweisen, welche eine variable Spannung abgibt, die einem Wechselrichter zugeführt wird, der über einen Zwischenkreis Wechselstrommotoren antreibt, die mit den einzelnen Nebenantrieben verbunden sind. Der Nachteil dieser aus dem Stand der Technik bekannten Lösung ist, daß bei einem Abfallen des Spannungsniveaus im Zwischenkreis das zur Verfügung stehende Drehmoment ebenfalls abfällt.

Die in Elektrofahrzeugen üblicherweise verwendeten Energiequellen geben eine variable Spannung ab. Besonders bei Fahrzeugen, die ihre elektrische Energie aus der Kombination eines Verbrennungsmotors mit einem Generator beziehen, können große Spannungsdifferenzen zwischen der Leerlaufdrehzahl und der Nenndrehzahl auftreten, wobei bezüglich des gleichgerichteten Spannungszwischenkreises mit dem Faktor 3 bis 4 zu rechnen ist. Werden nun die Nebenantriebe auf das Spannungsniveau bei Nenndrehzahl ausgelegt, so steht bei Leerlaufdrehzahl nicht mehr genug Spannung zur Verfügung, um einen sicheren Betrieb der Nebenantriebe zu gewährleisten.

Es wurde bereits vorgeschlagen, zwischen dem Generator und dem nachgeordneten Wechselrichter zur Ansteuerung der Asynchronmotoren für die Nebenantriebe einen Spannungswandler vorzusehen, der die erforderliche Spannung zur Versorgung des Wechselrichters bereitstellt. Dieser zusätzliche Spannungswandler ist aufwendig, teuer und zusätzlich verlustbehaftet.

Aufgabe der vorliegenden Erfindung ist es, ein Verfahren zum Betrieb von elektrischen Nebenantrieben in Elektrofahrzeugen zu schaffen, das sich einfach und kostengünstig verwirklichen läßt.

Ausgehend von einem Verfahren der eingangs näher genannten Art erfolgt die Lösung dieser Aufgabe mit dem im kennzeichnenden Teil des Patentanspruchs angegebenem Merkmal.

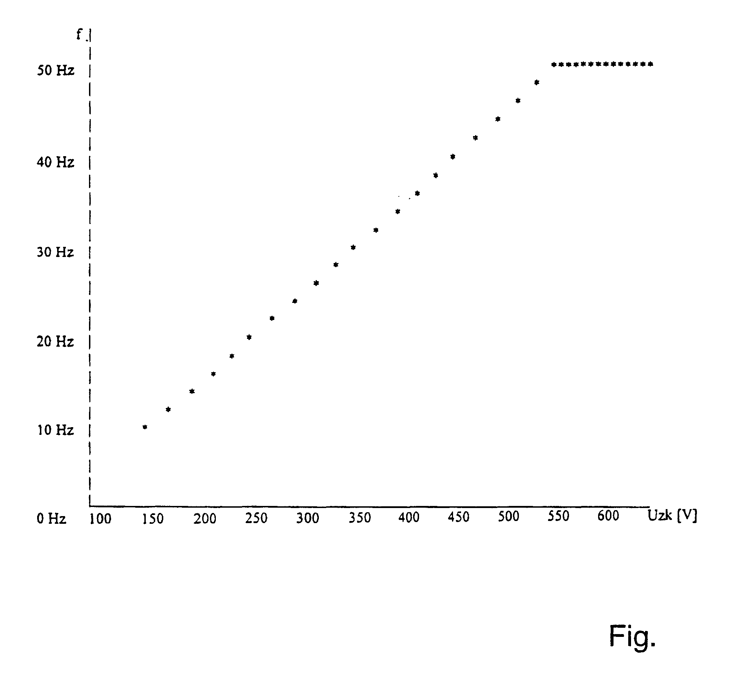

Gemäß der Erfindung werden also die Nebenantriebe in einem Elektrofahrzeug mittels eines Wechselrichters und preisgünstigen Wechselsstrommotoren, z. B. 400-V-AC-Motoren betrieben, die als Katalogware erhältlich sind und die über eine Spannungs-Frequenz-Kennlinie U/f angesteuert werden. Diese Wechselstrommotoren sind mit den einzelnen Nebenantrieben verbunden, wobei der Arbeitspunkt auf der U/f-Kennlinie durch das aktuelle Spannungsniveau im Zwischenkreis zwischen Wechselrichter und Wechselstrommotoren vorgegeben ist; eine graphische Darstellung ist in der beigefügten Figur angegeben.

Je niedriger das Spannungsniveau im Zwischenkreis ist, desto kleiner ist die Frequenz und damit auch die Drehzahl der angesteuerten AC-Motoren, wobei das maximal mögliche Drehmoment jedoch weiterhin zur Verfügung steht.

Das erfindungsgemäße Verfahren eignet sich für alle Nebenantriebe, für die eine prinzipbedingte Drehzahl- und damit Leistungsreduzierung bei niedrigem Spannungsniveau im Zwischenkreis akzeptabel ist. Auf den bisher üblichen Spannungswandler (Hochsetzsteller) kann verzichtet werden bei gleichzeitigem Einsatz preisgünstiger normierter Wechselstrommotoren.

## Patentansprüche

1. Verfahren zum Betrieb von elektrischen Nebenantrieben in Elektrofahrzeugen, die eine Gleichstromquelle aufweisen, welche eine variable Spannung abgibt, die einem Wechselrichter zugeführt wird, der über einen Zwischenkreis Wechselstrommotoren ansteuert, die mit den einzelnen Nebenantrieben verbunden sind, **dadurch gekennzeichnet, daß** die Wechselstrommotoren der Nebenantriebe über eine Spannungs-Frequenz-Kennlinie (U/f) angesteuert werden, wobei der Arbeitspunkt auf dieser Kennlinie durch das aktuelle Spannungsniveau des Zwischenkreises vorgegeben ist, sodass die Drehzahl und damit die Leistung der Wechselstrommotoren eine Funktion des Spannungsniveaus im Zwischenkreis ist.

## Claims

1. Method for operating electric auxiliary drives in electric vehicles. Said electric vehicles are provided with a direct-current source which generates a variable voltage that is fed to an inverter, which via an intermediate circuit controls AC motors that are linked to the individual auxiliary drives, **characterized in that** the AC motors of the auxiliary drives are controlled via a voltage-frequency characteristic (U/f), with the working point on this characteristic being set by the current voltage level of the intermediate circuit, so that the speed and thus the performance of the AC motors is a function of the voltage level in the intermediate circuit.

## Revendications

1. Procédé d'alimentation d'entraînements électriques auxiliaires pour des véhicules électriques, comportant une source de courant continu, qui délivre une tension variable qui est transmise à un onduleur, qui commande des moteurs à courant alternatif à travers un circuit intermédiaire, qui sont connectés aux entraînements auxiliaires individuels, **caractérisé en ce que** les moteurs à courant alternatif des entraînements auxiliaires sont commandés à l'aide d'une courbe caractéristique de la fréquence en fonction de la tension (U/f), le point de fonctionnement sur cette courbe étant déterminé par le niveau effectif de la tension du circuit intermédiaire, de telle manière que le nombre de tours, et de ce fait la puissance des moteurs à courant alternatif, sont des fonctions du niveau de tension effectif dans le circuit intermédiaire.
